# EUROPÄISCHE PATENTANMELDUNG

(11) **EP 2 130 930 A2**
(43) Veröffentlichungstag der Anmeldung: **09.12.2009**
(21) Anmeldenummer: 09161497.4
(22) Anmeldetag: 29.05.2009
(51) Int. Cl.: C12Q 1/68

(54) **Elektrisches Substrat zum Einsatz als Träger von Biomolekülen**

(30) Priorität: 06.06.2008 DE 102008002267
(71) Anmelder: FRIZ Biochem Gesellschaft für Bioanalytik mbH, 82061 Neuried (DE)
(72) Erfinder: Persike, Norbert, 81539, München (DE); Kratzmüller, Thomas, 81476, München (DE); Hartwich, Gerhard, 80639, Münchcen (DE)
(74) Vertreter: Zipse Habersack Kritzenberger

(57) **Zusammenfassung**

Beschrieben wird ein elektrisches Substrat 32 zum Einsatz als Träger von Biomolekülen bei einem Verfahren zur elektrochemischen Detektion in einer Elektrolytlösung. Das elektrische Substrat umfasst eine Trägerplatte 12 aus Silizium, eine auf der Trägerplatte 12 angeordnete und die Trägerplatte teilweise bedeckende Adhäsionsschicht 14 aus Metall, auf der Adhäsionsschicht 14 angeordnete, aus Metall bestehende Teststellen 24, wobei die Oberfläche der Teststellen zur Anbindungen von Biomolekülen 26 vorgesehen ist, eine die Adhäsionsschicht 14 und die nicht von der Adhäsionsschicht 14 bedeckten Teile der Trägerplatte 12 abdeckende, isolierende Sperrschicht 16 aus einem Si-basierten Isolator, wobei die Sperrschicht 16 die Teststellen 24 in deren Randbereich bedeckt, und eine die isolierende Sperrschicht 16 bedeckende, hydrophobe Deckschicht 18, wobei die Deckschicht 18 die isolierende Sperrschicht 16 vollständig abdeckt. Erfindungsgemäß besteht die hydrophobe Deckschicht 18 aus einer Silizium-organischen Verbindung mit aliphatischen und/oder aromatischen Resten.

## Beschreibung

### Technisches Gebiet

Die vorliegende Erfindung betrifft ein elektrisches Substrat zum Einsatz als Träger von Biomolekülen bei einem Verfahren zur elektrochemischen Detektion in einer Elektrolytlösung.

### Stand der Technik

Die Verwendung von sogenannten Biochips in Forschung, Diagnostik, bei toxikologischen Testverfahren und in vielen anderen Anwendungsbereichen hat sich in den vergangenen Jahren zu einer weit verbreiteten Technologie entwickelt. Unter Biochips sind Träger zu verstehen, auf deren Oberfläche eine Vielzahl von Teststellen vorhanden ist, d.h. in Rastern angeordnete, kleine Flächenabschnitte, an denen jeweils eine bestimmte Art von biologischem Material immobilisiert ist. Diese Form der Anordnung nennt man auch Mikroarray. Die Array-Technologie erlaubt zeitsparende parallele Testverfahren, beispielsweise zum gleichzeitigen Nachweis bestimmter DNA- oder RNA-Sequenzen in unterschiedlichen Proben oder anderer Ligat-Ligand-Assoziationsereignisse.

Die eigentliche Detektion der Assoziationsereignisse beruht beispielsweise auf elektrochemischen Verfahren wie sie in der WO 99/51778 A1 beschrieben werden. Bei einem elektrochemischen Verfahren werden die Assoziationsereignisse anhand der mit der Assoziation einhergehenden Änderung der elektrochemischen Eigenschaften der Sonden-Moleküle nachgewiesen.

Grundsätzlich besteht das Bestreben, möglichst viele Teststellen auf einer möglichst geringen Fläche eines Biochips unterzubringen. Eine erhöhte Zahl an Teststellen erhöht die Anzahl der in einem einzelnen Experiment durchführbaren parallelen Nachweise von Assoziationsereignissen. Die üblicherweise sehr geringen Mengen an Probensubstanz machen es zudem erforderlich, möglichst geringe Substratflächen vorzusehen, die mit der Probe in Kontakt gebracht werden müssen.

### Darstellung der Erfindung

Aufgabe der vorliegenden Erfindung ist es daher, ein elektrisches Substrat zum Einsatz als Träger von Biomolekülen bei einem Verfahren zur elektrochemischen Detektion in einer Elektrolytlösung zur Verfügung zu stellen, welches unter Verwendung von Standardverfahren hergestellt werden kann und eine hohe Zahl an Teststellen pro Fläche des Substrats aufweist.

Diese Aufgabe wird erfindungsgemäß durch das elektrische Substrat gemäß dem unabhängigen Patentanspruch 1 gelöst. Weitere vorteilhafte Details, Aspekte und Ausgestaltungen der vorliegenden Erfindung ergeben sich aus den abhängigen Ansprüchen, der Beschreibung, den Figuren und den Beispielen.

Die vorliegende Erfindung stellt ein elektrisches Substrat zum Einsatz als Träger von Biomolekülen bei einem Verfahren zur elektrochemischen Detektion in einer Elektrolytlösung zur Verfügung. Das elektrische Substrat umfasst eine Trägerplatte aus Silizium, eine auf der Trägerplatte angeordnete und die Trägerplatte teilweise bedeckende Adhäsionsschicht aus Metall, auf der Adhäsionsschicht angeordnete, aus Metall bestehende Teststellen, wobei die Oberfläche der Teststellen zur Anbindung von Biomolekülen vorgesehen ist, eine die Adhäsionsschicht und die nicht von der Adhäsionsschicht bedeckten Teile der Trägerplatte abdeckende, isolierende Sperrschicht aus einem Si-basierten Isolator, wobei die Sperrschicht die Teststellen in deren Randbereich bedeckt, und eine die isolierende Sperrschicht bedeckende, hydrophobe Deckschicht, wobei die Deckschicht die isolierende Sperrschicht vollständig abdeckt. Erfindungsgemäß besteht die hydrophobe Deckschicht aus einer Silizium-organischen Verbindung mit aliphatischen und/oder aromatischen Resten.

Die Verwendung einer Silizium-organischen Verbindung als hydrophobe Deckschicht ist mit einer Reihe von Vorteilen verbunden. Die Herstellung der Deckschicht erfolgt durch Reaktion eines Chlorsilans mit dem die isolierende Sperrschicht bildenden Si-basierten Isolator. Die Bildung der Deckschicht geschieht dabei durch gut definierte chemische Reaktionen, was schlussendlich zu einer im chemischen Sinne genau definierten Oberfläche führt. Eine Reaktion einer derart hydrophobisierten Oberfläche mit einer Elektrolytlösung, mit der das elektrische Substrat bei seinem Einsatz in einem Verfahren zur elektrochemischen Detektion in Kontakt kommt, ist praktisch ausgeschlossen. Einen weiteren Vorteil stellt die Tatsache dar, dass bei der Herstellung der Deckschicht gut etablierte Halbleiterprozesse und die entsprechenden Chemikalien eingesetzt werden können, also die Anwendung standardisierter Verfahren möglich ist.

Daneben haben Experimente gezeigt, dass eine Deckschicht aus einer Silizium-organischen Verbindung mit aliphatischen und/oder aromatischen Resten ganz hervorragende hydrophobe Eigenschaften aufweist. So werden bei der Anbindung der Biomoleküle an die Teststellen Tröpfchen der die Biomoleküle enthaltenden Lösung geradezu in die Vertiefungen der Teststellen eingetrieben. Der Eintrockenprozess der Lösung ist praktisch ausschließlich auf die zugängliche Oberfläche der Teststellen begrenzt, wodurch eine nahezu vollständige Anbindung der als Sondenmoleküle eingesetzten Biomoleküle an die Teststellen gewährleistet wird.

Die stark hydrophobe Wirkung der Deckschicht hat aber noch einen weiteren Effekt. Da es zu keinem Verlaufen der die Sondenmoleküle enthaltenden Lösung kommt, sondern zu einem gezielten Einfließen in die Vertiefung der jeweiligen Teststelle, kann eine hohe Zahl an Teststellen pro Fläche des elektrischen Substrats vorgesehen werden. Aufgrund der Tatsache, dass kein Sicherheitsabstand zwischen den einzelnen Teststellen eingehalten werden muss, weil es ja zu keinem Verlaufen der Tröpfchen kommt, kann auch bei Einsatz von Standard-Spotting-Verfahren eine hohe Ortsauflösung erzielt werden.

Bei den als Sondenmoleküle eingesetzten Biomolekülen werden unabhängig von der chemischen Struktur Moleküle verwendet, die aufgrund ihrer Primär-, Sekundär- oder Tertiärstruktur wenigstens eine Bindungsstelle für zu detektierende Targetmoleküle aufweisen. Als Sondenmoleküle werden beispielsweise Nukleinsäureoligomere, Proteine oder Oligopeptide verwendet. Als Targetmoleküle können ebenfalls unabhängig von ihrer chemischen Struktur Moleküle eingesetzt werden, die spezifisch an die Sondenmoleküle binden können. Targetmoleküle können wie Sondenmoleküle beispielsweise Nukleinsäureoligomere, Proteine, Oligopeptide, u.a. sein. Bei dem elektrischen Substrat handelt es sich also um einen Biochip, insbesondere einen DNA-Chip oder einen Protein-Chip.

Bei den auf dem erfindungsgemäßen elektrischen Substrat angeordneten Teststellen handelt es sich um zumindest 2 räumlich abgetrennte Bereiche, die jeweils Sondenmoleküle (Biomoleküle) an ihrer Oberfläche aufweisen. Die Teststellen können jeweils unterschiedliche oder gleiche Sondenmoleküle an ihrer Oberfläche tragen. Bevorzugt weist das elektrische Substrat zumindest 12 und besonders bevorzugt zumindest 32 Teststellen auf. Eine besonders vorteilhafte Gestaltungsvariante sieht vor, dass das elektrische Substrat zumindest 64, insbesondere zumindest 96 Teststellen aufweist. Auf diese Weise können parallel bis zu 96 Experimente, je nach gebundenen Sondenmolekülen auch unterschiedlicher Art, pro elektrischem Substrat ausgeführt werden, was besonders zeitsparend ist.

Nach einer bevorzugten Ausführungsform der Erfindung ist die Adhäsionsschicht aus einem Metall ausgewählt aus der Gruppe bestehend aus Nickel, Titan, Platin und deren Gemische gebildet. Die genannten Metalle sind vorteilhafterweise geeignet, eine gut haftende Bindung zu der Silizium-Trägerplatte einerseits und eine ebenfalls gut haftende Bindung zu den metallischen Teststellen andererseits herzustellen. Eine besonders gute Bindung ergibt sich, wenn die Teststellen aus Gold gefertigt sind.

Es sei an dieser Stelle erwähnt, dass die Adhäsionsschicht der haftenden Bindung des Teststellenmaterials an den Silizium-Träger dient. Es versteht sich damit von selbst, dass die Adhäsionsschicht zumindest in den Bereichen auf dem Silizium-Träger anwesend sein muss, in denen Teststellen vorgesehen sind. Dabei kommt es nicht darauf an, ob die laterale Ausdehnung der Adhäsionsschicht etwas kleiner als die entsprechende Ausdehnung der Teststelle ist. Genauso kann die Adhäsionsschicht auch in einen Bereich auf dem Silizium-Träger ragen, der nicht von einer Teststelle abgedeckt wird. Im Extremfall ist sogar daran zu denken, dass die Adhäsionsschicht den Silizium-Träger vollständig bedeckt.

Gemäß einer weiteren bevorzugten Ausführungsform bestehen die Teststellen aus Gold. Im Falle des Einsatzes des erfindungsgemäßen elektrischen Substrats zum Nachweis von Oligonukleotid-Oligonukleotid-Assoziationsereignissen ergibt sich ein weiterer Vorteil aus der Verwendung von Gold als Material für die Teststellen. Die Sonden-Oligonukleotide können in diesem Fall nämlich einfach und sicher durch Ausbildung von Au-S-Bindungen an der Oberfläche der Teststellen immobilisiert werden.

Die isolierende Sperrschicht ist bevorzugt aus einem Si-basierten Isolator ausgewählt aus der Gruppe bestehend aus SiNₓ, SiOₓ und deren Gemischen gebildet. Die Verwendung von SiNₓ und/oder SiOₓ als Sperrschicht erleichtert das Aufbringen der Deckschicht. Die verwendeten Chlorsilane reagieren mit der Sperrschicht aus SiNₓ und/oder SiOₓ und ergeben unter Freisetzung von HCl die gewünschte Silizium-organische Oberfläche.

Gemäß einer vorteilhaften Weiterbildung der Erfindung weist die Trägerplatte Durchkontaktierungen auf, wobei sich jeweils eine Durchkontaktierung unter einer Adhäsionsschicht mit darüberliegender Teststelle befindet. In dieser Ausführungsform sind die Durchkontaktierungen bevorzugt aus Wolfram oder Aluminium gebildet. Die Durchkontaktierungen erlauben die Ausbildung des elektrischen Substrats als "aktiven Chip" (CMOS-Chip), bei dem das Messsignal mittels einer im Chip integrierten Mikroelektronik erfasst (und ausgewertet) wird.

Gemäß einer ganz besonders bevorzugten Ausführungsform handelt es sich bei der Silizium-organischen Verbindung um eine Silizum-Verbindung mit Methyl-Resten. Die Deckschicht weist bei der Verwendung von Alkyl-Resten ganz ausgezeichnete hydrophobe Eigenschaften auf, die bei Verwendung von Methyl-Resten ganz besonders stark zum Tragen kommen. Zur Herstellung der Deckschicht kann in diesem Fall Dichlordimethylsilan eingesetzt werden.

Die vorliegende Erfindung umfasst außerdem ein Trägerelement, an dem ein erfindungsgemäßes elektrisches Substrat angeordnet ist. Das Trägerelement umfasst einen oberen Halteabschnitt, einen mittleren Abschnitt und einen unteren Trägerabschnitt, wobei an dem unteren Trägerabschnitt das elektrische Substrat angeordnet ist. Das elektrische Substrat weist elektrische Kontaktstellen auf, die in elektrischem Kontakt zu den Teststellen des elektrischen Substrats stehen. Der Trägerabschnitt weist elektrische Kontaktstellen auf, die in elektrischem Kontakt zu den Teststellen des elektrischen Substrats stehen. Der Halteabschnitt weist elektrische Kontaktstellen auf, die elektrische Kontakte zu einer nachfolgenden Detektions- und/oder Auswerteeinheit herstellen. Schließlich sind in dem mittleren Abschnitt des Trägerelements leitfähige Bereiche vorgesehen, die die Leitung der elektrischen Daten von den elektrischen Kontaktstellen des Trägerabschnitts zu den elektrischen Kontaktstellen des Halteabschnitts ermöglichen. Die leitfähigen Bereiche des mittleren Abschnitts befinden sich in der Regel nicht an der Oberfläche des Trägerelements, sondern sind in dem isolierenden Material des Trägerelements eingebettet.

Sowohl der Halteabschnitt des Trägerelementes als auch der Abschnitt, an dem das elektrische Substrat angeordnet ist, weisen also definierte elektrische Kontaktstellen auf, so dass einerseits ein elektrischer Kontakt zwischen den Testsites des Biochips und den Leitungen am Trägerelement und andererseits ein elektrischer Kontakt zwischen den Leitungen am Trägerelement und der Detektions- bzw. Auswerteeinheit besteht. Das Trägerelement stellt somit durch seine leitfähigen Bereiche einen elektrischen Kontakt zwischen der Detektionseinheit und jeweils einer bestimmten Teststelle her. Auf diese Weise ist eine direkte Detektion von Analyt-Bindeereignissen, insbesondere von Hybridisierungsereignissen, an den jeweiligen Teststellen möglich.

Das Inkontaktbringen der Teststellen mit der die Targetmoleküle enthaltenden Lösung erfolgt beispielsweise durch Eintauchen des elektrischen Substrats bzw. durch Eintauchen zumindest des das elektrische Substrat umfassenden Teils des Trägerelementes in eine Probenlösung. Die Lösung ist beispielsweise in einer von oben zugänglichen Aufnahmeeinheit bereitgestellt, so dass das elektrische Substrat bzw. zumindest der das elektrische Substrat umfassende Teil des Trägerelementes von oben her in die Aufnahmeeinheit eingeführt werden kann, bis sie bzw. er so weit in die Lösung eintaucht, dass die Teststellen des elektrischen Substrats vollständig von der Lösung benetzt sind. Beim Eintauchen in eine Analyt-Lösung wird dabei ein direkter Kontakt zwischen den auf den Teststellen immobilisierten Sondenmolekülen und den in der zu analysierenden Lösung enthaltenen Targetmolekülen hergestellt. Die erfindungsgemäßen Trägerelemente sind hierzu sehr gut geeignet.

Zur Herstellung des elektrischen Kontakts zwischen Trägerelement und nachfolgender Detektionseinheit ist der Halteabschnitt des Trägerelementes vorteilhafterweise als Stecker ausgebildet, der in eine entsprechende Buchse der Detektions- oder Auswerteeinheit eingesteckt werden kann. Der Halteabschnitt des Trägerelementes kann seitlich an diesem angeordnet sein, jedoch auch an dem dem elektrischen Substrat gegenüberliegenden Endabschnitt des Trägerelementes.

Gemäß einer bevorzugten Ausführungsform der vorliegenden Erfindung ist das Trägerelement im wesentlichen flächig ausgebildet, wodurch eine leichtere Handhabung und eine günstige Ausbildung des Halteabschnitts als Stecker ermöglicht wird.

Je nach Art des verwendeten Biochips kann das über die leitenden Verbindungen gesendete Signal ein reines Messsignal sein, das von einer nachfolgenden Detektions- bzw. Auswerteeinheit weiterverarbeitet werden muss. Bei Verwendung eines sogenannten "aktiven Chips" (CMOS-Chip), bei dem das Messsignal mittels einer im Chip integrierten Mikroelektronik ausgewertet wird, kann das gesendete Signal bereits das Endsignal sein. In diesem Fall ist eine geringere Anzahl von in dem Trägerelement integrierten Datenleitungen notwendig. Insbesondere sind bei Verwendung von aktiven Chips nur fünf Ableitungen auf dem Trägerelement erforderlich.

Die vorliegende Erfindung umfasst außerdem die Verwendung eines oben beschriebenen Trägerelements in einem Verfahren zum qualitativen und/oder quantitativen Nachweis von spezifischen Wechselwirkungen zwischen auf den Teststellen immobilisierten Biomolekülen und Targetmolekülen. Bevorzugt wird das Trägerelement in einem Verdrängungsassay zum qualitativen und/oder quantitativen Nachweis von Nukleinsäureoligomer-Hybridisierungsereignissen eingesetzt. Ein solches Verfahren ist beispielsweise in der WO 03/018834 A2 beschrieben. An den Teststellen ist daher bevorzugt wenigstens eine Art von Sonden-Nukleinsäureoligomeren immobilisiert.

Die vorliegende Erfindung umfasst außerdem die Verwendung eines erfindungsgemäßen elektrischen Substrats in einem Verfahren zum qualitativen und/oder quantitativen Nachweis von spezifischen Wechselwirkungen zwischen auf den Teststellen des elektrischen Substrats immobilisierten Biomolekülen und Targetmolekülen. Bevorzugt wird ein erfindungsgemäßes elektrisches Substrat in einem Verdrängungsassay zum qualitativen und/oder quantitativen Nachweis von Nukleinsäureoligomer-Hybridisierungsereignissen eingesetzt. Ein solches Verfahren ist beispielsweise in der WO 03/018834 A2 beschrieben. An den Teststellen ist daher bevorzugt wenigstens eine Art von Sonden-Nukleinsäureoligomeren immobilisiert.

Insbesondere ist das erfindungsgemäße elektrische Substrat dazu geeignet, in einem elektrochemischen Detektionsverfahren ausgewählt aus der Gruppe bestehend aus Amperometrie, Cyclovoltametrie, Impedanzspektroskopie und Potentiometrie verwendet zu werden.

### Kurze Beschreibung der Zeichnungen

Die Erfindung soll nachfolgend anhand von Ausführungsbeispielen im Zusammenhang mit den Zeichnungen näher erläutert werden. Gleiche Bezugszeichen bezeichnen grundsätzlich gleiche Bauteile, auch wenn diese teilweise nicht mehrmals erläutert sind. Es zeigen:
- Fig. 1: im Schnitt ein elektrisches Substrat nach einem Ausführungsbeispiel der Erfindung in schematischer Darstellung;
- Fig. 2: ein erfindungsgemäßes Trägerelement mit einem daran angeordneten elektrischen Substrat;
- Fig.3: im Detail das erfindungsgemäße Trägerelement aus Figur 2 mit daran angeordnetem elektrischen Substrat.

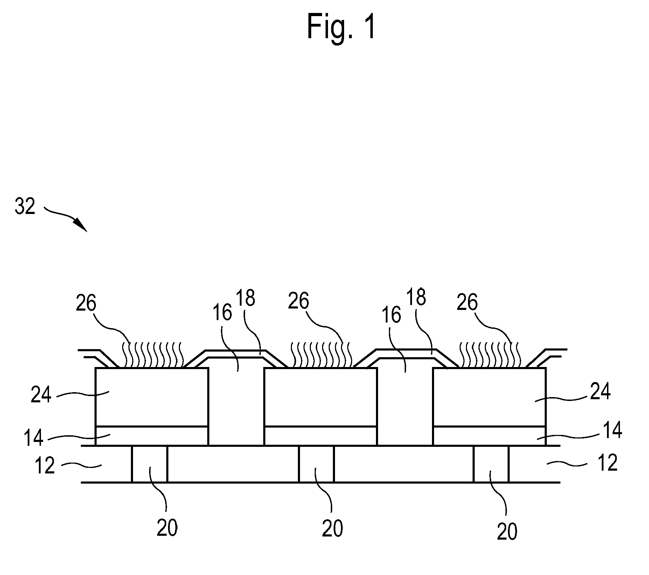

Mit Bezug auf die schematische Darstellung der Figur 1 bezeichnet 32 ein elektrisches Substrat, das als Träger von Biomolekülen bei einem Verfahren zur elektrochemischen Detektion in einer Elektrolytlösung zum Einsatz kommt. Das elektrische Substrat 32 umfasst eine Trägerplatte 12 aus Silizium. Auf der Trägerplatte 12 ist eine Adhäsionsschicht 14 aus Gold angeordnet, deren Ausdehnung im dargestellten Ausführungsbeispiel auf die laterale Ausdehnung der Teststellen 24 beschränkt ist. Auf der Adhäsionsschicht 14 sind die aus Metall bestehenden Teststellen 24 angeordnet, wobei die Teststellen 24 an ihrer Oberfläche Biomoleküle 26 tragen. Die Trägerplatte 12 weist Durchkontaktierungen 20 aus Wolfram auf, die der Ableitung elektrischer Signale von den Teststellen in die Mikroelektronik des CMOS-Chips dienen.

Mit dem Bezugszeichen 16 ist die die Adhäsionsschicht 14 und die nicht von der Adhäsionsschicht 14 bedeckten Teile der Trägerplatte 12 abdeckende, isolierende Sperrschicht aus einem Si-basierten Isolator bezeichnet. Wie aus der Figur 1 zu ersehen ist, bedeckt die Sperrschicht 16 die Teststellen 24 in deren Randbereichen. Die Sperrschicht 16 ist von einer hydrophoben Deckschicht 18 bedeckt, wobei die Deckschicht 18 die isolierende Sperrschicht 16 im Randbereich der Teststellen 24 vollständig abdeckt. Die hydrophobe Deckschicht besteht aus einer Silizium-organischen Verbindung mit Methyl-Resten.

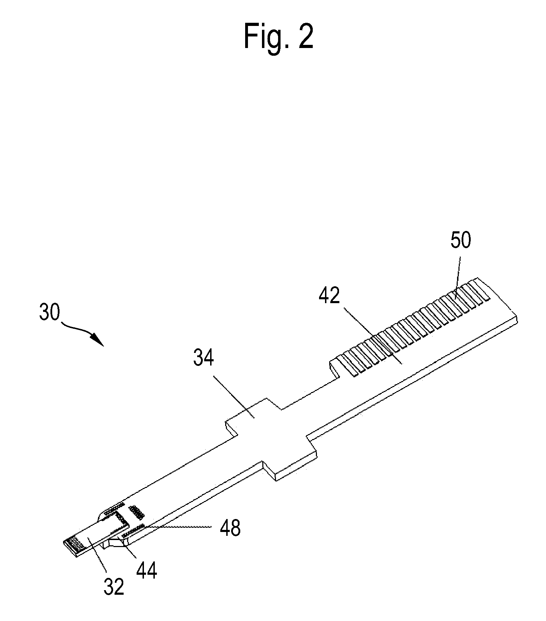

In Figur 2 ist ein Ausführungsbeispiel eines erfindungsgemäßen Trägerelements 30 dargestellt. Das elektrische Substrat 32, an dem in beispielsweise 96 Teststellen Sondenmoleküle, beispielsweise Sonden-Nukleinsäureoligomere immobilisiert sind, ist an dem Trägerabschnitt 44 des Trägerelements 30 angeordnet. Bei dem elektrischen Substrat 32 handelt es sich um einen Biochip, insbesondere einen DNA-Chip oder einen Protein-Chip. Dieser Biochip ist fest mit dem Trägerelement 30 verbunden.

Da die erfindungsgemäße Vorrichtung insbesondere dazu geeignet ist, für ein elektrochemisches Detektionsverfahren verwendet zu werden, beispielsweise eine Detektion mittels Amperometrie, Cyclovoltametrie, Impedanzspektroskopie oder Potentiometrie, weist das dargestellte Trägerelement 30 leitfähige Bereiche auf. Diese dienen dazu, einen elektrischen Kontakt zwischen dem elektrischen Substrat 32 und einer Detektions- und/oder Auswerteeinheit (nicht dargestellt) herzustellen.

Das in Figur 2 dargestellte Trägerelement 30 umfasst einen oberen Halteabschnitt 42, einen mittleren Abschnitt 34 und einen unteren Trägerabschnitt 44, an dem das elektrische Substrat 32 angeordnet ist. Der Trägerabschnitt 44 weist elektrische Kontaktstellen 48 auf, die in elektrischem Kontakt mit den elektrischen Kontaktstellen 36 des elektrischen Substrats 32 stehen. Die Kontaktstellen 50 befinden sich seitlich am Halteabschnitt 42. Die Kontaktstellen 50 stellen elektrische Kontakte zu einer nachfolgenden Detektions- und/oder Auswerteeinheit her. Das Trägerelement 30 weist eine T-Struktur und eine Anschrägung bzw. Verbreiterung im untersten Randbereich des Trägerabschnittes 44 auf. Schließlich sind in dem mittleren Abschnitt 34 leitfähige Bereiche vorgesehen, die die Leitung der elektrischen Daten von den elektrischen Kontaktstellen 48 des Trägerabschnitts 44 zu den elektrischen Kontaktstellen 50 des Halteabschnitts 42 ermöglichen. Diese Leitungen sind in das isolierende Material des Trägerelements 30 eingebettet. Auf diese Weise ist eine direkte Detektion von Ereignissen, insbesondere von Hybridisierungsereignissen, an den jeweiligen Testsites möglich.

Je nach Art des verwendeten Biochips kann das über die leitenden Verbindungen gesendete Signal ein reines Messsignal sein, das von einer nachfolgenden Detektions- bzw. Auswerteeinheit weiterverarbeitet werden muss. Bei Verwendung eines sogenannten "aktiven Chips" (CMOS-Chip), bei dem das Messsignal mittels einer im Chip integrierten Mikroelektronik ausgewertet wird, werden digitale Daten zwischen Chip und Auswerteeinheit übertragen, so dass das verwendete Trägerelement 30 eine geringere Anzahl von Kontaktstellen 50 aufweisen muss. Insbesondere sind bei Verwendung von aktiven Chips nur fünf Kontaktstellen 50 auf dem Halteabschnitt 42 des Trägerelements 30 nötig. Diese sind beispielsweise am oberen Ende des Halteabschnitts 42 angeordnet.

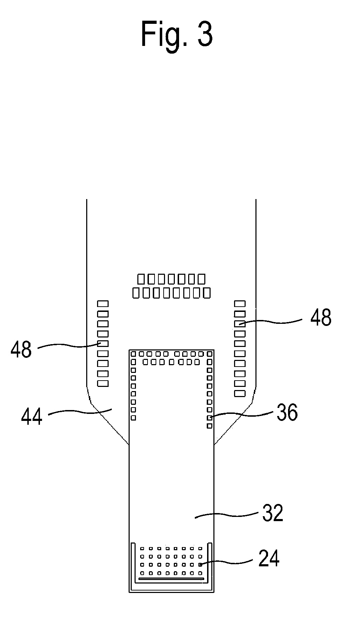

In Figur 3 ist ersichtlich, dass ein an dem Trägerabschnitt 44 angeordneter Biochip 32 den unteren Rand des Trägerelementes 30 relativ weit nach unten überragt, und er deutlich schmäler ausgebildet ist als der Trägerabschnitt 44. Im Detail dargestellt sind die Teststellen 24 und die elektrischen Kontaktstellen 36 des elektrischen Substrats sowie die elektrischen Kontaktstellen 48 des Trägerabschnitts 44. Die elektrischen Kontaktstellen 36 stehen in elektrischem Kontakt zu den Teststellen 24 des elektrischen Substrats 32. Die elektrischen Kontaktstellen 48 des Trägerabschnitts 44 stehen in elektrischem Kontakt zu den elektrischen Kontaktstellen 36 des elektrischen Substrats 32.

### Beispiele

### Beispiel 1: Herstellung der hydrophoben Deckschicht

Zur Herstellung der hydrophoben Deckschicht wird das elektrische Substrat mit SiOₓ oder SiNₓ Decksicht (16) 1 min bis 2 Stunden lang bei Raumtemperatur in einer frisch hergestellten 0,1 bis 2%-igen (v/v) Lösung von Trimethylchlorsilan in trockenem Heptan inkubiert. Während dieser Reaktionszeit wird das Silan unter Freisetzung von HCI an die Oberfläche des Siliziumnitrids kovalent gebunden. Anschließend wird das Substrat zweimal mit silanfreiem Heptan, mit Ethanol und abschließend mit Reinstwasser gespült. Ein Abperlen von Wasser zeigt eine erfolgreiche Hydrophobisierung an.

Wahlweise kann die Oberfläche vor der Inkubation durch Plasmabehandlung oder Behandlung mit konz. H₂SO₄/30%-H₂O₂ (im Verhältnis 1:2 (v/v)) behandelt werden. Alternativ dazu können auch andere Silane wie Dimethyldichlorsilan, Propyldimethylchlorsilan usw. und andere Lösungsmittel wie Chloroform, Hexan, Methylenchlorid usw. verwendet werden.

### Beispiel 2: Alternative Herstellung der hydrophoben Deckschicht

Zur Herstellung der hydrophoben Deckschicht wird das elektrische Substrat mit SiOₓ- oder SiNₓ-Decksicht 15 min lang bei Raumtemperatur Hexamethyldisilazan (HMDS) in der Gasphase ausgesetzt. Dies kann bewerkstelligt werden, indem durch Durchleiten von Argon oder Stickstoff durch das flüssige HMDS eine mit HMDS angereicherte Argon- oder Stickstoffatmosphäre erzeugt wird, welche in oder durch den Behälter geleitet wird, in dem sich die zu beschichtenden Substrate befinden. Während dieser Reaktionszeit erfolgt eine kovalente Anbindung der Trimethylsilylgruppe unter Freisetzung von NH₃ an die Oberfläche des Siliziumnitrids. Anschließend wird HMDS-freies Argon oder Stickstoff über das Substrat geleitet. Ein Abperlen von Wasser zeigt eine erfolgreiche Hydrophobisierung an.

Wahlweise kann die Oberfläche vor der Inkubation durch Plasmabehandlung oder Behandlung mit konz. H₂SO₄/30%-H₂O₂ (im Verhältnis 1:2 (v/v)) behandelt werden. Alternativ dazu können auch beliebige Gerätschaften und Verfahren zur chemischen Gasphasenabscheidung (CDV, chemical vapour deposition) verwendet werden, wie sie in Halbleitertechnik zur Anwendung kommen und dem Fachmann gut bekannt sind.

### Bezugszeichenliste

- 12: Trägerplatte
- 14: Adhäsionsschicht
- 16: Sperrschicht
- 18: Deckschicht
- 20: Durchkontaktierung
- 24: Teststelle
- 26: Biomoleküle
- 30: Trägerelement
- 32: elektrisches Substrat
- 34: Begrenzungs- und Führungsabschnitt
- 36: elektrische Kontakte am elektrischen Substrat
- 42: Halteabschnitt
- 44: Trägerabschnitt
- 48: elektrische Kontakte am Trägerabschnitt
- 50: elektrische Kontakte am Halteabschnitt

## Patentansprüche

1. Elektrisches Substrat (32) zum Einsatz als Träger von Biomolekülen bei einem Verfahren zur elektrochemischen Detektion in einer Elektrolytlösung, mit
- einer Trägerplatte (12) aus Silizium,
- einer auf der Trägerplatte (12) angeordneten und die Trägerplatte (12) teilweise bedeckenden Adhäsionsschicht (14) aus Metall,
- auf der Adhäsionsschicht (14) angeordneten, aus Metall bestehenden Teststellen (24), wobei die Oberfläche der Teststellen zur Anbindung von Biomolekülen (26) vorgesehen ist,
- einer die Adhäsionsschicht (14) und die nicht von der Adhäsionsschicht (14) bedeckten Teile der Trägerplatte (12) abdeckenden, isolierenden Sperrschicht (16) aus einem Si-basierten Isolator, wobei die Sperrschicht (16) die Teststellen (24) in deren Randbereich bedeckt, und
- einer die isolierende Sperrschicht (16) bedeckenden, hydrophoben Deckschicht (18), wobei die Deckschicht (18) die isolierende Sperrschicht (16) vollständig abdeckt,
**dadurch gekennzeichnet, dass**
die hydrophobe Deckschicht (18) aus einer Silizium-organischen Verbindung mit aliphatischen und/oder aromatischen Resten besteht.

2. Elektrisches Substrat (32) nach Anspruch 1, **dadurch gekennzeichnet, dass die** Adhäsionsschicht (14) aus einem Metall ausgewählt aus der Gruppe bestehend aus Nickel, Titan, Platin und deren Gemische besteht.

3. Elektrisches Substrat (32) nach zumindest einem der Ansprüche 1 und 2, **dadurch gekennzeichnet, dass** die Teststellen (24) aus Gold bestehen.

4. Elektrisches Substrat (32) nach zumindest einem der Ansprüche 1 bis 3, **dadurch gekennzeichnet, dass** die isolierende Sperrschicht (16) aus einem Si-basierten Isolator ausgewählt aus der Gruppe bestehend aus SiNₓ, SiOₓ und deren Gemische besteht.

5. Elektrisches Substrat (32) nach zumindest einem der Ansprüche 1 bis 4, **dadurch gekennzeichnet, dass** die Trägerplatte (12) Durchkontaktierungen (20) aus Wolfram oder Aluminium aufweist, wobei die Durchkontaktierungen (20) unterhalb der Teststellen (24) angeordnet sind und mit der Adhäsionsschicht (14) in Kontakt stehen.

6. Elektrisches Substrat (32) nach zumindest einem der Ansprüche 1 bis 5, **dadurch gekennzeichnet, dass** es sich bei der Silizium-organischen Verbindung um eine Silizum-Verbindung mit Methyl-Resten handelt.

7. Trägerelement (30) mit einem oberen Halteabschnitt (42), einem mittleren Abschnitt (34) und einem unteren Trägerabschnitt (44) zur Anordnung eines elektrischen Substrats (32) gemäß einem der Ansprüche 1 bis 6, wobei
- das elektrische Substrat (32) elektrische Kontaktstellen (36) aufweist, die in elektrischem Kontakt zu den Teststellen (24) des elektrischen Substrats (32) stehen,
- der Trägerabschnitt (44) elektrische Kontaktstellen (48) aufweist, die in elektrischem Kontakt zu den elektrische Kontaktstellen (36) des elektrischen Substrats (32) stehen,
- der Halteabschnitt (42) elektrische Kontaktstellen (50) aufweist, die elektrische Kontakte zu einer nachfolgenden Detektions- und/oder Auswerteeinheit herstellen, und
- in dem mittleren Abschnitt (34) leitfähige Bereiche vorgesehen sind, die die Leitung der elektrischen Daten von den elektrischen Kontaktstellen (48) des Trägerabschnitts (44) zu den elektrischen Kontaktstellen (50) des Halteabschnitts (42) ermöglichen.

8. Verwendung eines Trägerelements (30) gemäß Anspruch 7 in einem Verfahren zum qualitativen und/oder quantitativen Nachweis von spezifischen Wechselwirkungen zwischen auf den Teststellen (24) immobilisierten Biomolekülen (26) und Targetmolekülen.

9. Verwendung eines elektrischen Substrats (32) gemäß einem der Ansprüche 1 bis 6 in einem Verfahren zum qualitativen und/oder quantitativen Nachweis von spezifischen Wechselwirkungen zwischen auf den Teststellen (24) immobilisierten Biomolekülen (26) und Targetmolekülen.

10. Verwendung nach Anspruch 9, wobei es sich bei dem Verfahren zum qualitativen und/oder quantitativen Nachweis von spezifischen Wechselwirkungen zwischen auf den Teststellen (24) immobilisierten Biomolekülen (26) und Targetmolekülen um ein Verdrängungsassay zum qualitativen und/oder quantitativen Nachweis von Nukleinsäureoligomer-Hybridisierungsereignissen handelt.

11. Verwendung nach zumindest einem der Ansprüche 9 und 10, wobei zum Nachweis der spezifischen Wechselwirkungen zwischen den Biomolekülen (26) und Targetmolekülen ein elektrochemisches Nachweisverfahren ausgewählt aus der Gruppe bestehend aus Amperometrie, Cyclovoltammetrie, Impedanzspektroskopie und Potentiometrie eingesetzt wird.
